(19) **Europäisches Patentamt European Patent Office Office européen des brevets**

(11) **EP 4 428 463 B1**

(12) **EUROPEAN PATENT SPECIFICATION**

(45) Date of publication and mention of the grant of the patent:
**11.03.2026 Bulletin 2026/11**

(21) Application number: **21967997.4**

(22) Date of filing: **13.12.2021**

(51) International Patent Classification (IPC):
**F24F 11/64** *(2018.01)* **G05B 15/02** *(2006.01)*

(52) Cooperative Patent Classification (CPC):
**G05B 15/02; F24F 11/64;** G05B 2219/2614

(86) International application number:
**PCT/JP2021/045729**

(87) International publication number:
**WO 2023/112074 (22.06.2023 Gazette 2023/25)**

(54) **APPARATUS CONTROL DEVICE AND APPARATUS CONTROL METHOD**

VORRICHTUNGSSTEUERUNG UND VORRICHTUNGSSTEUERUNGSVERFAHREN

DISPOSITIF DE COMMANDE D'APPAREIL ET PROCÉDÉ DE COMMANDE D'APPAREIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.09.2024 Bulletin 2024/37**

(73) Proprietor: **MITSUBISHI ELECTRIC CORPORATION Chiyoda-ku Tokyo 100-8310 (JP)**

(72) Inventors:
• **MARIYAMA, Toshisada Tokyo 100-8310 (JP)**
• **HOKARI, Hiroaki Tokyo 100-8310 (JP)**

• **YOSHIKAWA, Nobuyuki Tokyo 100-8310 (JP)**
• **YOSHIMURA, Genta Tokyo 100-8310 (JP)**
• **MIYATA, Yoshikuni Tokyo 100-8310 (JP)**
• **YOKOSUKA, Yusuke Tokyo 100-8310 (JP)**

(74) Representative: **Pfenning, Meinig & Partner mbB Patent- und Rechtsanwälte Joachimsthaler Straße 10-12 10719 Berlin (DE)**

(56) References cited:
WO-A1-2016/185630    WO-A1-2020/183631
JP-A- 2020 134 051    JP-A- H06 207 735
US-A1- 2018 088 544    US-A1- 2018 313 557

**Description**

TECHNICAL FIELD

The present disclosure relates to an apparatus control device and an apparatus control method.

BACKGROUND ART

There is an apparatus control device that calculates a control value of a control target apparatus. For example, Patent Literature 1 discloses an air conditioning control device that acquires a control value of an air conditioner serving as a control target apparatus.

The air conditioning control device includes an acquisition unit that acquires, from a sensor that observes an environment in which the air conditioning control device is installed, an observed value of the environment and a control-content determination unit that gives the observed value acquired by the acquisition unit to a learning model and acquires a control value of the air conditioner from the learning model.

CITATION LIST

PATENT LITERATURES

Patent Literature 1: JP 2021-156565 A
Patent Literature 2: US 2018/088544 A1
Patent Literature 3: WO 2020/183631 A1
Patent Literature 4: US 2018/313557 A1
Patent Literature 5: JP H06 207735 A
Patent Literature 6: JP 2020 134051 A

SUMMARY OF INVENTION

TECHNICAL PROBLEM

As information to be considered in order to more appropriately control a control target apparatus, in addition to an observable value that can be observed by a sensor, an unobservable value that cannot be directly observed by the sensor may be required.

For example, in the air conditioning control device disclosed in Patent Literature 1, an observable value such as a temperature that can be observed by a sensor is considered, but an unobservable value such as a thermal load is not considered. In a case where the thermal load or the like is not considered, it is difficult to correctly estimate how the environment changes depending on the output of an air conditioner, so that appropriate air conditioning control cannot be executed.

A conventional apparatus control device like the air conditioning control device disclosed in Patent Literature 1 has a problem that a control value is not calculated in consideration of an unobservable value.

Patent Literature 2 discloses an indoor environment model creation device that is configured to create an indoor environment model of an indoor space in which air-conditioning equipment configured to condition air, an indoor humidity sensor configured to measure an indoor humidity of the indoor space, and a $CO_2$ sensor configured to measure a $CO_2$ concentration in the indoor space are installed. The indoor environment model includes a plurality of physics models in which heat, moisture, and $CO_2$ concentration parameters are included. The indoor environment model creation device includes: a data storage unit configured to store operation data of the air-conditioning equipment in a learning target period as learning-use input data, and store measurement data measured by the $CO_2$ sensor and the humidity sensor; and a model parameter learning unit configured to comprehensively learn the plurality of physics models with use of the learning-use input data and the measurement data, which are stored in the data storage unit.

Patent Literature 3 discloses an information processing device having: a thermal load learning means that finds a thermal load formula to calculate a thermal load when a fixed amount of time has passed from the present time by using learning data for a thermal load influential factor for an air conditioning device; a prediction means that predicts whether the thermal load will increase from the present when the fixed amount of time has passed by using the thermal load formula found by the thermal load learning means in the case of performing a low load operation in which a compressor operates at less than or equal to a standard operation frequency continuing for a predetermined threshold time or longer; and a signal generation means that outputs, to the compressor, an oil return instruction signal to instruct the operation frequency to increase if the prediction means predicts that the thermal load will not increase and that does not output the oil return instruction signal to the compressor if the prediction means predicts that the thermal load will increase.

Patent Literature 4 discloses a thermostat includes an equipment controller and a model predictive controller. The equipment controller is configured to drive the temperature of a building zone to an optimal temperature setpoint by operating HVAC equipment to provide heating or cooling to the building zone. The model predictive controller is configured to determine the optimal temperature setpoint by generating a cost function that accounts for a cost operating the HVAC equipment during each of a plurality of time steps in an optimization period, using a predictive model to predict the temperature of the building zone during each of the plurality of time steps, and optimizing the cost function subject to a constraint on the predicted temperature of the building zone to determine optimal temperature setpoints for each of the time steps.

Patent Literature 5 discloses radiation temperature estimation means that provides an input to PMV value (average prediction temperature cold feeling statement) calculation means 1, and radiation temperature being one of parameters of an equation yielding a PMV is estimated with a neutral network which takes as inputs room temperature 3, set wind velocity 4, fresh air temperature 5. Air condition control means 8 controls air condition means 7 such that a yielded PMV value is stabilized in a predetermined region. Hereby, PMV values in a dwelling region can be estimated with an inexpensive construction without limitation of installation location of radiation temperature detector means.

Patent Literature 6 discloses an air conditioner control device that includes a prior estimation model update section, and a setting content determining section. The prior estimation model update section estimates a value representing an indoor climate in a steady condition of an air conditioner by applying a posterior estimation model when a period in which the setting contents of the air conditioner are not changed exceeds a reference period and the indoor climate does not reach the steady condition, and updates a prior estimation model on the basis of the value representing the estimated indoor climate. The setting content determining section estimates a value representing the indoor climate in the steady condition of the air conditioner by applying the prior estimation model, and determines the setting contents of the air conditioner on the basis of the value representing the estimated indoor climate.

The present disclosure has been made to solve the above problems, and an object thereof is to obtain an apparatus control device and an apparatus control method capable of acquiring a control value that changes depending on an unobservable value that is a value not directly observed by a sensor.

SOLUTION TO PROBLEM

The solution to the above problems is provided by the present invention, which is defined by independent apparatus claim 1 and independent method claim 7.

Optional features of the invention are provided by the dependent claims.

ADVANTAGEOUS EFFECTS OF INVENTION

According to the present disclosure, it is possible to acquire a control value that changes depending on the unobservable value that is a value not directly observed by the sensor.

BRIEF DESCRIPTION OF DRAWINGS

FIG. 1 is a configuration diagram illustrating an apparatus control system including an apparatus control device 3 according to a first embodiment.
FIG. 2 is a hardware configuration diagram illustrating hardware of the apparatus control device 3 according to the first embodiment.
FIG. 3 is a hardware configuration diagram of a computer in a case where the apparatus control device 3 is implemented by software, firmware, or the like.
FIG. 4 is a flowchart illustrating an apparatus control method that is a processing procedure performed by the apparatus control device 3.
FIG. 5 is a flowchart illustrating processing contents of a state prediction unit 15.
FIG. 6 is a configuration diagram illustrating an apparatus control system including an apparatus control device 3 according to a second embodiment.
FIG. 7 is a hardware configuration diagram illustrating hardware of the apparatus control device 3 according to the second embodiment.
FIG. 8 is a configuration diagram illustrating an apparatus control system including an apparatus control device 3 according to a third embodiment.

FIG. 9 is a hardware configuration diagram illustrating hardware of the apparatus control device 3 according to the third embodiment.

FIG. 10 is an explanatory diagram illustrating an observation predicted value $X^j(t)$ and an observed value $X^j(t)$ acquired at a time (t-1).

DESCRIPTION OF EMBODIMENTS

Hereinafter, in order to describe the present disclosure in more detail, embodiments for carrying out the present disclosure will be described with reference to the accompanying drawings.

First Embodiment

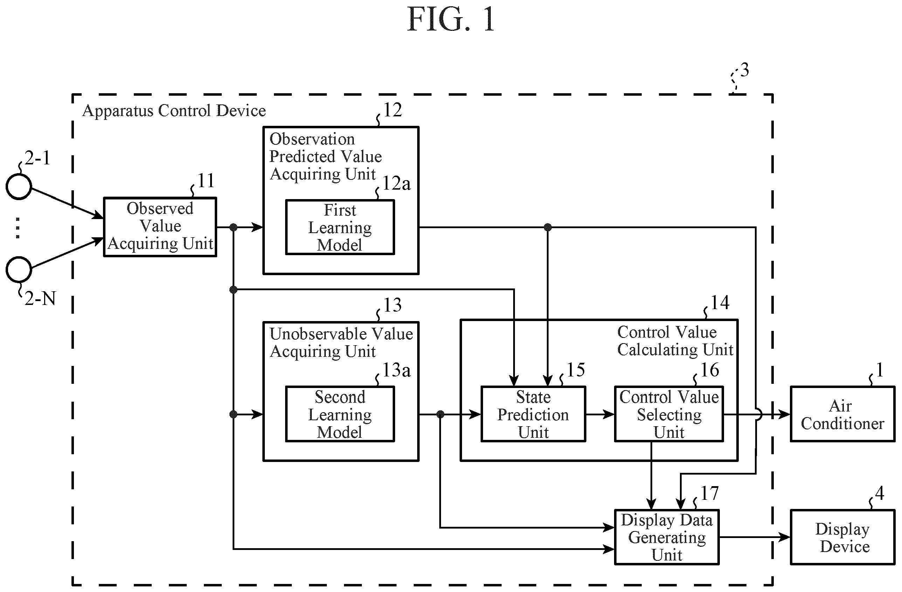

FIG. 1 is a configuration diagram illustrating an apparatus control system including an apparatus control device 3 according to a first embodiment.

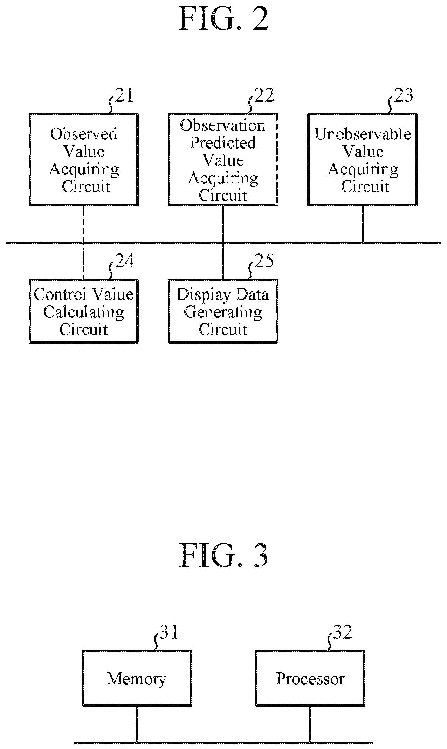

FIG. 2 is a hardware configuration diagram illustrating hardware of the apparatus control device 3 according to the first embodiment.

The apparatus control system illustrated in FIG. 1 is a system including the apparatus control device 3 that acquires a control value of an air conditioner 1 serving as a control target apparatus and controls the air conditioner 1 based on the control value. In the apparatus control system illustrated in FIG. 1, the air conditioner 1 is a control target apparatus. However, this is merely an example, and for example, a robot, a boiler, a servo system, an infrastructure control apparatus, a pump control apparatus, a building control apparatus, or an elevator may be the control target apparatus.

The apparatus control system illustrated in FIG. 1 includes the air conditioner 1, N (N is an integer equal to or more than one) sensors 2-1 to 2-N, the apparatus control device 3, and a display device 4.

The sensor 2-n (n=1, ..., N) observes an environment in which the air conditioner 1 is installed, and outputs an observed value of the environment to the apparatus control device 3.

Examples of the sensor 2-n include a room temperature sensor that observes the indoor temperature of a room in which the air conditioner 1 is installed, an outside air temperature sensor that observes the outside air temperature of the room, a humidity sensor that observes the humidity of the room, a solar radiation sensor that observes the amount of solar radiation to the room, and a human sensor that observes the number of people present in the room.

The apparatus control device 3 includes an observed value acquiring unit 11, an observation predicted value acquiring unit 12, an unobservable value acquiring unit 13, a control value calculating unit 14, and a display data generating unit 17.

The display device 4 includes a display.

The display device 4 displays the control value and the like of the air conditioner 1 on the display based on display data output from the apparatus control device 3.

The observed value acquiring unit 11 is implemented by, for example, an observed value acquiring circuit 21 illustrated in FIG. 2.

The observed value acquiring unit 11 acquires an observed value of an environment from the sensor 2-n (n=1, ..., N).

The observed value acquiring unit 11 outputs the observed value of the environment to each of the observation predicted value acquiring unit 12, the unobservable value acquiring unit 13, the control value calculating unit 14, and the display data generating unit 17.

The observation predicted value acquiring unit 12 is implemented by, for example, an observation predicted value acquiring circuit 22 illustrated in FIG. 2.

An internal memory of the observation predicted value acquiring unit 12 stores a first learning model 12a.

The first learning model 12a is implemented by, for example, a neural network model or a deep learning model.

In the first learning model 12a, at the time of learning, the observed value of the environment from the sensor 2-n (n=1, ..., N) is given as input data, and an observation predicted value that is a future observed value from the sensor 2-n is given as training data. The first learning model 12a outputs an observation predicted value corresponding to the input data at the time of inference by learning the observation predicted value at the time of learning.

In the apparatus control device 3 illustrated in FIG. 1, the first learning model 12a is stored in the internal memory of the observation predicted value acquiring unit 12. However, this is merely an example, and the first learning model 12a may be stored in a storage device outside the apparatus control device 3.

The observation predicted value acquiring unit 12 gives the observed value acquired by the observed value acquiring unit 11 to the first learning model 12a, and acquires the observation predicted value from the first learning model 12a.

The observation predicted value acquiring unit 12 outputs the observation predicted value acquired from the first learning model 12a to each of the control value calculating unit 14 and the display data generating unit 17.

The unobservable value acquiring unit 13 is implemented by, for example, an unobservable value acquiring circuit 23 illustrated in FIG. 2.

An internal memory of the unobservable value acquiring unit 13 stores a second learning model 13a.

The second learning model 13a is implemented by, for example, a neural network model or a deep learning model.

In the second learning model 13a, at the time of learning, the observed value of the environment from the sensor 2-n (n=1, ..., N) is given as input data, and an unobservable value that is a value not directly observed by the sensor 2-n is given as training data. The second learning model 13a outputs an unobservable value corresponding to the input data at the time of inference by learning the unobservable value at the time of learning.

In the apparatus control device 3 illustrated in FIG. 1, the second learning model 13a is stored in the internal memory of the unobservable value acquiring unit 13. However, this is merely an example, and the second learning model 13a may be stored in a storage device outside the apparatus control device 3.

The unobservable value acquiring unit 13 gives the observed value acquired by the observed value acquiring unit 11 to the second learning model 13a, and acquires the unobservable value that is a value not directly observed by the sensor 2-n from the second learning model 13a.

The unobservable value acquiring unit 13 outputs the unobservable value acquired from the second learning model 13a to each of the control value calculating unit 14 and the display data generating unit 17.

The control value calculating unit 14 is implemented by, for example, a control value calculating circuit 24 illustrated in FIG. 2.

The control value calculating unit 14 includes a state prediction unit 15 and a control value selecting unit 16.

The control value calculating unit 14 acquires an observed value from the observed value acquiring unit 11, acquires an observation predicted value from the observation predicted value acquiring unit 12, and acquires an unobservable value from the unobservable value acquiring unit 13.

The control value calculating unit 14 calculates the control value of the air conditioner 1 using the observed value acquired by the observed value acquiring unit 11, the observation predicted value acquired by the observation predicted value acquiring unit 12, and the unobservable value acquired by the unobservable value acquiring unit 13.

The control value calculating unit 14 outputs the control value to each of the air conditioner 1 and the display data generating unit 17.

The state prediction unit 15 substitutes the observed value acquired by the observed value acquiring unit 11, the observation predicted value acquired by the observation predicted value acquiring unit 12, and the unobservable value acquired by the unobservable value acquiring unit 13 into an equation of state, and obtains the solution of the equation of state as the control value of the air conditioner 1.

In addition, when each equation of state in each of a plurality of control methods is prepared as the equation of state, the state prediction unit 15 substitutes the observed value, the observation predicted value, and the unobservable value into each equation of state, thereby calculating a control value for each control method.

The control value selecting unit 16 selects a control value for any one control method among control values for a plurality of control methods.

The control value selecting unit 16 outputs the selected control value to each of the air conditioner 1 and the display data generating unit 17.

The display data generating unit 17 is implemented by, for example, a display data generating circuit 25 illustrated in FIG. 2.

The display data generating unit 17 generates display data for displaying one or more of the unobservable value acquired by the unobservable value acquiring unit 13 and the control value calculated by the control value calculating unit 14, and outputs the display data to the display device 4.

In addition, the display data generating unit 17 generates display data for displaying one or more of the observed value acquired by the observed value acquiring unit 11 and the observation predicted value acquired by the observation predicted value acquiring unit 12, and outputs the display data to the display device 4.

In FIG. 1, it is assumed that each of the observed value acquiring unit 11, the observation predicted value acquiring unit 12, the unobservable value acquiring unit 13, the control value calculating unit 14, and the display data generating unit 17, which are components of the apparatus control device 3, is implemented by dedicated hardware illustrated in FIG. 2. That is, it is assumed that the apparatus control device 3 is implemented by the observed value acquiring circuit 21, the observation predicted value acquiring circuit 22, the unobservable value acquiring circuit 23, the control value calculating circuit 24, and the display data generating circuit 25.

Each of the observed value acquiring circuit 21, the observation predicted value acquiring circuit 22, the unobservable value acquiring circuit 23, the control value calculating circuit 24, and the display data generating circuit 25 corresponds to, for example, a single circuit, a composite circuit, a programmed processor, a parallel programmed processor, an application specific integrated circuit (ASIC), a field-programmable gate array (FPGA), or a combination thereof.

The components of the apparatus control device 3 are not limited to those implemented by dedicated hardware, and the apparatus control device 3 may be implemented by software, firmware, or a combination of software and firmware.

The software or firmware is stored in a memory of a computer as a program. The computer means hardware that executes the program, and corresponds to, for example, a central processing unit (CPU), a central processing device, a processing device, an arithmetic device, a microprocessor, a microcomputer, a processor, or a digital signal processor (DSP).

FIG. 3 is a hardware configuration diagram of a computer in a case where the apparatus control device 3 is implemented by software, firmware, or the like.

In a case where the apparatus control device 3 is implemented by software, firmware, or the like, a program for causing a computer to execute each processing procedure in each of the observed value acquiring unit 11, the observation predicted value acquiring unit 12, the unobservable value acquiring unit 13, the control value calculating unit 14, and the display data generating unit 17 is stored in a memory 31. Then, a processor 32 of the computer executes the program stored in the memory 31.

In addition, FIG. 2 illustrates an example in which each of the components of the apparatus control device 3 is implemented by dedicated hardware, and FIG. 3 illustrates an example in which the apparatus control device 3 is implemented by software, firmware, or the like. However, this is merely an example, and some components in the apparatus control device 3 may be implemented by dedicated hardware, and the remaining components may be implemented by software, firmware, or the like.

Next, an operation of the apparatus control system illustrated in FIG. 1 will be described.

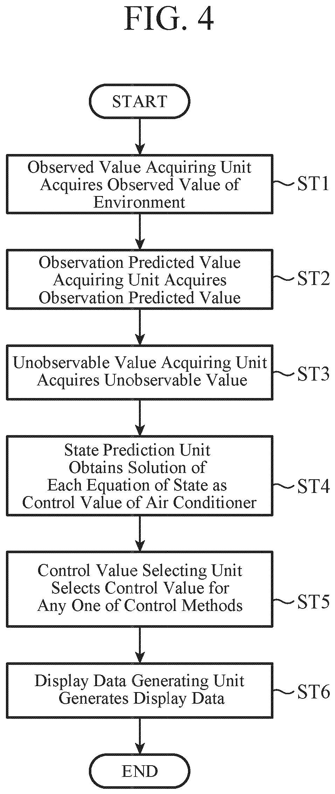

FIG. 4 is a flowchart illustrating an apparatus control method that is a processing procedure performed by the apparatus control device 3.

In the apparatus control system illustrated in FIG. 1, for convenience of explanation, it is assumed that the sensors 2-1 to 2-N include J room temperature sensors that observe the room temperature of a room, which is the environment in which the air conditioner 1 is installed, and K human sensors that observe the number of people present in the room. Each of J and K is an integer equal to or more than one and equal to or less than N, and $(J + K) \leq N$.

J room temperature sensors are individually distinguished by 2'-1 to 2'-J, and K human sensors are individually distinguished by 2"-1 to 2"-K.

The observed value of room temperature observed by the room temperature sensor 2'-j (j=1, ..., J) is $X^j(t)$, and the observed value of the number of people observed by the human sensor 2"-k (k=1, ..., K) is $Y^k(t)$. t is a current time, and t+q is a future time. q=1, ..., Q, and Q is an integer equal to or more than one.

The room temperature sensor 2'-j (j=1, ..., J) outputs the observed value $X^j(t)$ of the room temperature to the apparatus control device 3.

The human sensor 2"-k (k=1, ..., K) outputs the observed value $Y^k(t)$ of the number of people to the apparatus control device 3.

In the apparatus control system illustrated in FIG. 1, the room temperature sensor 2'-j and the human sensor 2"-k are sensors 2-n that observe the environment in which the air conditioner 1 is installed. However, this is merely an example, and the sensor 2-n that observes the environment in which the air conditioner 1 is installed may be, for example, an outside air temperature sensor that observes an outside air temperature outside the room that is the environment in which the air conditioner 1 is installed, a humidity sensor that observes the humidity of the room, a daily illuminance sensor that observes the daily illuminance to the room, or a sensor that acquires a weather forecast value of an area including the environment.

The observed value acquiring unit 11 of the apparatus control device 3 acquires the observed value $X^j(t)$ of the room temperature as the observed value of the environment from the room temperature sensor 2'-j (j=1, ..., J) (step ST1 in FIG. 4).

In addition, the observed value acquiring unit 11 acquires the observed value $Y^k(t)$ of the number of people as the observed value of the environment from the human sensor 2"-k (k=1, ..., K) (step ST1 in FIG. 4).

The observed value acquiring unit 11 outputs the observed value $X^j(t)$ of the room temperature and the observed value $Y^k(t)$ of the number of people to each of the observation predicted value acquiring unit 12, the unobservable value acquiring unit 13, the control value calculating unit 14, and the display data generating unit 17.

The observation predicted value acquiring unit 12 acquires each of the observed value $X^j(t)$ (j=1, ..., J) of the room temperature and the observed value $Y^k(t)$ (k=1, ..., K) of the number of people from the observed value acquiring unit 11.

At the time of learning, the first learning model 12a is assumed to be given, as the input data, a set temperature $T_{SET}$ of the air conditioner 1 in addition to the observed value $X^j(t)$ of the room temperature and the observed value $Y^k(t)$ of the number of people, for example. Furthermore, it is assumed that a future observed value $X^j(t+q)$ (q=1, ..., Q) of the room temperature is given to the first learning model 12a as the training data. In this case, the first learning model 12a learns the future observed value $X^j(t+q)$ of the room temperature.

The future observed value $X^j(t+q)$ of the room temperature, which is the training data, is simulated by a simulator (not illustrated) on the basis of the observed value $X^j(t)$ of the room temperature, the observed value $Y^k(t)$ of the number of people, and the set temperature $T_{SET}$, for example. If the observed value $Y^k(t)$ of the number of people is known, it is possible to estimate the total approximate value of the amount of heat output from one or more persons present in the room. In addition, if the observed value $X^j(t)$ of the room temperature and the set temperature $T_{SET}$ are known, it is possible to estimate the operation rate that is the workload of the air conditioner 1. Therefore, if the observed value $X^j(t)$ of the room temperature, the observed value $Y^k(t)$ of the number of people, and the set temperature $T_{SET}$ are given, the simulator can simulate the future observed value $X^j(t+q)$ of the room temperature. Here, if the set temperature $T_{SET}$ is a fixed temperature fixed to, for example, 23 degrees, the simulator can simulate the future observed value $X^j(t+q)$ of the room temperature using the fixed temperature instead of the set temperature $T_{SET}$. In this case, even if the set temperature $T_{SET}$ is not given to the first learning model 12a at the time of learning, the first learning model 12a can learn the future observed value $X^j(t+q)$ of the room temperature.

Here, the simulator simulates the future observed value $X^j(t+q)$ of the room temperature using the observed value $X^j(t)$ of the room temperature, the observed value $Y^k(t)$ of the number of people, and the set temperature $T_{SET}$. However, this is merely an example, and even if the simulator uses the observed value of the daily illuminance from the daily illuminance sensor instead of the observed value $Y^k(t)$ of the number of people, it is possible to simulate the future observed value $X^j(t+q)$ of the room temperature. In this case, the first learning model 12a learns the future observed value $X^j(t+q)$ of the room temperature if, at the time of learning, the observed value $X^j(t)$ of the room temperature, the observed value of the daily illuminance, and the set temperature $T_{SET}$ are given as the input data and the future observed value $X^j(t+q)$ of the room temperature is given as the training data.

In addition, the simulator can simulate the future observed value $X^j(t+q)$ of the room temperature using, for example, the observed value of the daily illuminance in addition to the observed value $X^j(t)$ of the room temperature, the observed value $Y^k(t)$ of the number of people, and the set temperature $T_{SET}$. In general, the simulation accuracy of the simulator improves as the number of types of input data increases. In this case, the first learning model 12a learns the future observed value $X^j(t+q)$ of the room temperature if, at the time of learning, the observed value $X^j(t)$ of the room temperature, the observed value $Y^k(t)$ of the number of people, the observed value of the daily illuminance, and the set temperature $T_{SET}$ are given as the input data and the future observed value $X^j(t+q)$ of the room temperature is given as the training data.

The simulator may simulate the future observed value of humidity using, for example, the observed value of humidity from the humidity sensor and the observed value $Y^k(t)$ of the number of people, instead of the observed value $X^j(t)$ of the room temperature. In this case, the first learning model 12a learns the future observed value of humidity if, at the time of learning, the observed value of humidity from the humidity sensor and the observed value $Y^k(t)$ of the number of people are given as the input data and the future observed value of humidity is given as the training data. If the first learning model 12a learns the future observed value of humidity, the future observed value of humidity can be output at the time of inference.

If the input data at the time of learning includes, for example, the observed value $X^j(t)$ of the room temperature and the observed value $Y^k(t)$ of the number of people, the observation predicted value acquiring unit 12 gives the observed value $X^j(t)$ of the room temperature and the observed value $Y^k(t)$ of the number of people to the first learning model 12a at the time of inference.

If the input data at the time of learning includes, for example, the observed value $X^j(t)$ of the room temperature, the observed value $Y^k(t)$ of the number of people, and the set temperature $T_{SET}$, the observation predicted value acquiring unit 12 gives the observed value $X^j(t)$ of the room temperature, the observed value $Y^k(t)$ of the number of people, and the set temperature $T_{SET}$ to the first learning model 12a at the time of inference.

The observation predicted value acquiring unit 12 acquires, from the first learning model 12a, an observation predicted value $X^j(t+q)$ that is a future observed value $X^j(t+q)$ ($q = 1, ..., Q$) of the room temperature as an inference result (step ST2 in FIG. 4).

The observation predicted value acquiring unit 12 outputs the observation predicted value $X^j(t+q)$ to each of the control value calculating unit 14 and the display data generating unit 17.

The unobservable value acquiring unit 13 acquires the observed value $Y^k(t)$ ($k=1, ..., K$) of the number of people from the observed value acquiring unit 11.

It is assumed that, at the time of learning, each of the observed value $Y^k(t)$ of the number of people and history data is given to the second learning model 13a as the input data. In addition, it is assumed that the current unobservable value $Z^m(t)$ and the future unobservable value $Z^m(t+q)$ ($q=1, ..., Q$) are given to the second learning model 13a as the training data. $m=1, ..., M$, and $M$ is an integer equal to or more than one. In this case, the second learning model 13a learns each of the current unobservable value $Z^m(t)$ and the future unobservable value $Z^m(t+q)$. The history data is data indicating a change in the number of people in the past with the lapse of time. Furthermore, the history data is obtained by recording the observed value of the number of people in the past output from the observed value acquiring unit 11.

Each of the current unobservable value $Z^m(t)$ and the future unobservable value $Z^m(t+q)$, which are the training data, is simulated by a simulator (not illustrated) on the basis of the observed value $Y^k(t)$ of the number of people and the history data. If the observed value $Y^k(t)$ of the number of people is known, it is possible to estimate the total approximate value of the amount of heat output from one or more persons present in the room. In addition, if the history data can be obtained, the tendency of the change in the number of people with the lapse of time can be known, thus it is possible to estimate the tendency of the change in the thermal load. Therefore, in a case where the unobservable value is a thermal load, the simulator can simulate each of the current unobservable value $Z^m(t)$ and the future unobservable value $Z^m(t+q)$ ($q=1, ..., Q$) if the observed value $Y^k(t)$ of the number of people and the history data are given.

Here, the simulator simulates each of the current unobservable value $Z^m(t)$ and the future unobservable value $Z^m(t+q)$ using the observed value $Y^k(t)$ of the number of people and the history data. However, this is merely an example, and the simulator may simulate each of the current unobservable value $Z^m(t)$ and the future unobservable value $Z^m(t+q)$ using the observed value $Y^k(t)$ of the number of people and the past observed value $Y^k(t-1)$ of the number of people.

In this case, the second learning model 13a learns each of the current unobservable value $Z^m(t)$ and the future unobservable value $Z^m(t+q)$ if, at the time of learning, the observed value $Y^k(t)$ of the number of people and the past observed value $Y^k(t-1)$ of the number of people are given as the input data and the current unobservable value $Z^m(t)$ and the future unobservable value $Z^m(t+q)$ are given as the training data.

In addition, the simulator can simulate each of the current unobservable value $Z^m(t)$ and the future unobservable value $Z^m(t+q)$ using, for example, the observed value of the daily illuminance in addition to the observed value $Y^k(t)$ of the number of people and the past observed value $Y^k(t-1)$ of the number of people. In general, the simulation accuracy of the simulator improves as the number of types of input data increases. In this case, the second learning model 13a learns each of the current unobservable value $Z^m(t)$ and the future unobservable value $Z^m(t+q)$ if, at the time of learning, the observed value $Y^k(t)$ of the number of people, the past observed value $Y^k(t-1)$ of the number of people, and the observed value of the daily illuminance are given as the input data and the current unobservable value $Z^m(t)$ and the future unobservable value $Z^m(t+q)$ are given as the training data.

In the apparatus control system illustrated in FIG. 1, assuming that the unobservable value is a thermal load, the second learning model 13a learns each of the current unobservable value $Z^m(t)$ and the future unobservable value $Z^m(t+q)$. However, this is merely an example, and the second learning model 13a may learn each of the current unobservable value and the future unobservable value other than the thermal load.

Examples of the unobservable value other than the thermal load include convection in a room that is an environment in which the air conditioner 1 is installed.

For example, if the observed value $X^j(t)$ of the room temperature, the blowing direction of the air conditioner 1, and layout data are used, the simulator can simulate the convection in the room as the unobservable value. The layout data is data indicating the arrangement of furniture or the like installed in a room. In this case, if, at the time of learning, the observed value $X^j(t)$ of the room temperature, the blowing direction of the air conditioner 1, and the layout data are given as the input data, and the current convection and the future convection are given as the training data, the second learning model 13a determines that the unobservable value is the convection, and learns each of the current unobservable value $Z^m(t)$ and the future unobservable value $Z^m(t+q)$.

For example, if the blowing direction of the air conditioner 1 and the layout data are constant, the second learning model 13a can learn each of the current unobservable value $Z^m(t)$ and the future unobservable value $Z^m(t+q)$ if only the observed value $X^j(t)$ of the room temperature is given as the input data and the current convection and the future convection are given as the training data.

In addition, examples of the unobservable value other than the thermal load include the opening and closing degree of a valve under a situation in which an opening degree sensor is not installed, the amount of microorganisms under a situation in which a microorganism detection sensor is not installed, and the number of people under a situation in which a human sensor is not installed.

If the input data at the time of learning includes, for example, the observed value $Y^k(t)$ of the number of people and the past observed value $Y^k(t-1)$ of the number of people, the unobservable value acquiring unit 13 gives the observed value $Y^k(t)$ of the number of people and the past observed value $Y^k(t-1)$ of the number of people to the second learning model 13a at the time of inference.

If the input data at the time of learning includes, for example, the observed value $Y^k(t)$ of the number of people and the history data, the unobservable value acquiring unit 13 gives the observed value $Y^k(t)$ of the number of people and the history data to the second learning model 13a at the time of inference.

The unobservable value acquiring unit 13 acquires, from the second learning model 13a, each of the current unobservable value $Z^m(t)$ and the future unobservable value $Z^m(t+q)$ as an inference result (step ST3 in FIG. 4).

The unobservable value acquiring unit 13 outputs the current unobservable value $Z^m(t)$ and the future unobservable value $Z^m(t+q)$ to each of the control value calculating unit 14 and the display data generating unit 17.

The state prediction unit 15 of the control value calculating unit 14 acquires the observed value $X^j(t)$ of the room temperature and the observed value $Y^k(t)$ of the number of people from the observed value acquiring unit 11.

In addition, the state prediction unit 15 acquires the observation predicted value $X^j(t+q)$ ($q=1, ..., Q$) from the observation predicted value acquiring unit 12.

The state prediction unit 15 further acquires, from the unobservable value acquiring unit 13, each of the current unobservable value $Z^m(t)$ and the future unobservable value $Z^m(t+q)$.

The state prediction unit 15 acquires equations of state in C control methods from the internal memory. C is an integer equal to or larger than two. Examples of the control method include proportional integral differential (PID) control, proportional control, open sound control (OSC), model predictive control (MPC), and control in deep learning.

The following equation (1) shows an example of the equation of state.

$$\frac{dX^j(t)}{dt} = \sum_{j=1}^{J} P_{1j} X^j(t) + \sum_{k=1}^{K} P_{2k} Y^k(t) + \sum_{g=1}^{G} P_{3g} W^g(t) + Z^m(t) \qquad (1)$$

In Equation (1), $W^g(t)$ is a control value of the air conditioner 1. g=1, ..., G, and G is an integer equal to or more than one.

Each of $P_{1j}$, $P_{2k}$, and $P_{3g}$ is a parameter of the apparatus control system and is a default value.

When calculating G current control values $W^g(t)$ (g=1, ..., G) in the air conditioner 1, the state prediction unit 15 substitutes the observed value $X^j(t)$ of the room temperature, the observed value $Y^k(t)$ of the number of people, the observation predicted value $X^j(t+1)$, and the unobservable value $Z^m(t)$ into each equation of state.

The state prediction unit 15 obtains solutions of the equations of state as G control values $W^g(t)$ (g=1, ..., G) (step ST4 in FIG. 4).

Here, it is assumed that the observed value $X^j(t)$ and the observed value $Y^k(t)$ used by the state prediction unit 15 to calculate the control value $W^g(t)$ are the same as the observed value $X^j(t)$ and the observed value $Y^k(t)$, respectively, which are used when the unobservable value acquiring unit 13 acquires the unobservable value $Z^m(t)$ and the like. However, this is merely an example, and the observed value $X^j(t)$ and the observed value $Y^k(t)$ used by the state prediction unit 15 to calculate the control value $W^g(t)$ may be different from the observed value $X^j(t)$ and the observed value $Y^k(t)$, respectively, which are used when the unobservable value acquiring unit 13 acquires the unobservable value $Z^m(t)$ and the like.

That is, the observed value $X^j(t)$ used by the state prediction unit 15 is only required to be an observed value of the sensor 2-n and may be an observed value other than the room temperature. If $X^j(t)$ is an observed value other than the room temperature, $X^j(t+1)$ is an observation predicted value other than the room temperature.

In addition, the observed value $Y^k(t)$ used by the state prediction unit 15 is only required to be an observed value of the sensor 2-n and may be an observed value other than the number of people.

When calculating G future control values $W^g(t+q)$ (g=1, ..., G; q=1, ..., Q) in the air conditioner 1, the state prediction unit 15 substitutes the observed value $X^j(t;q)$ of the room temperature, the observed value $Y^k(t+q)$ of the number of people, the observation predicted value $X^j(t+q+1)$, and the unobservable value $Z^m(t+q)$ into each equation of state.

The state prediction unit 15 obtains solutions of the equations of state as G control values $W^g(t+q)$ (g=1, ..., G) at a time t+q (step ST4 in FIG. 4).

The state prediction unit 15 outputs, to the control value selecting unit 16, control values $W^g(t)$, $W^g(t+1)$, ..., $W^g(t+Q)$ at a plurality of times from the present to the future for each of the control methods as scheduling data $D_c$ (c=1, ..., C) of control values for the control methods.

$$D_c = W^g(t), W^g(t+1), ..., W^g(t+Q) \qquad (2)$$

The control value selecting unit 16 acquires the scheduling data Di to Dc for C control methods from the state prediction unit 15.

The control value selecting unit 16 selects the scheduling data $D_c$ for any one of the control methods among the scheduling data Di to Dc for the C control methods.

That is, the control value selecting unit 16 selects the control values $W^g(t)$, $W^g(t+1)$, ..., $W^g(t+Q)$ for any one of the control methods (step ST5 in FIG. 4).

Specifically, the control value selecting unit 16 compares predicted errors of the observation predicted value $X^j(t)$ used when calculating the control value $W^g(t-1)$ by each of the C control methods with each other.

That is, the control value selecting unit 16 compares the predicted errors of C observation predicted values $X^j(t)$ acquired at the time (t-1) with each other. The predicted error of the observation predicted value $X^j(t)$ is a difference between the observation predicted value $X^j(t)$ and the observed value $X^j(t)$ acquired at a time t.

The control value selecting unit 16 selects control values $W^g(t)$, $W^g(t+1)$, ..., $W^g(t+Q)$ with the smallest prediction error of the observation predicted value $X^j(t)$ among the control values $W^g(t)$, $W^g(t+1)$, ..., $W^g(t+Q)$ for C control methods.

The control value selecting unit 16 outputs the selected control values $W^g(t)$, $W^g(t+1)$, ..., $W^g(t+Q)$ to each of the air conditioner 1 and the display data generating unit 17.

The air conditioner 1 acquires the control values $W^g(t)$, $W^g(t+1)$, ..., $W^g(t+Q)$ from the control value selecting unit 16 of the control value calculating unit 14.

The air conditioner 1 operates based on the control value $W^g(t)$ at the time t. The air conditioner 1 operates based on the control value $W^g(t+q)$ at a time t+q (q=1, ..., Q).

The display data generating unit 17 acquires each of the observed value $X^j(t)$ (j=1, ..., J) of the room temperature and the observed value $Y^k(t)$ (k=1, ..., K) of the number of people from the observed value acquiring unit 11.

In addition, the display data generating unit 17 acquires the observation predicted value $X^j(t+q)$ (q=1, ..., Q) from the observation predicted value acquiring unit 12.

The display data generating unit 17 acquires, from the unobservable value acquiring unit 13, each of the current unobservable value $Z^m(t)$ and the future unobservable value $Z^m(t+q)$ (g=1, ..., G; q=1, ..., Q).

In addition, the display data generating unit 17 acquires the control values $W^g(t)$ and $W^g(t+q)$ (g=1, ..., G) from the control value selecting unit 16.

The display data generating unit 17 generates display data for displaying one or more of the unobservable value $Z^m(t)$ and the control values $W^g(t)$, $W^g(t+1)$, ..., $W^g(t+Q)$ (step ST6 in FIG. 4).

In addition, the display data generating unit 17 generates display data for displaying one or more of the observed value $X^j(t)$ of the room temperature, the observed value $Y^k(t)$ of the number of people, and the observation predicted value $X^j(t+1)$ (step ST6 in FIG. 4). Since the display data generating processing itself is a known technique, detailed description thereof is omitted.

The display data generating unit 17 outputs the generated display data to the display device 4.

The display device 4 displays the observed value $X^j(t)$ of the room temperature, the observed value $Y^k(t)$ of the number of people, the observation predicted value $X^j(t+1)$, the unobservable value $Z^m(t)$, or the control values $W^g(t)$, $W^g(t+1)$, ..., $W^g(t+Q)$ on the display based on the display data output from the display data generating unit 17.

In the first embodiment described above, the apparatus control device 3 is configured to include the observed value acquiring unit 11 that acquires, from the sensor 2-n (n=1, ..., N) that observes the environment in which the control target apparatus is installed, the observed value of the environment, the observation predicted value acquiring unit 12 that gives the observed value acquired by the observed value acquiring unit 11 to the first learning model 12a and acquires the observation predicted value that is the future observed value from the sensor 2-n from the first learning model 12a, and the unobservable value acquiring unit 13 that gives the observed value acquired by the observed value acquiring unit 11 to the second learning model 13a and acquires the unobservable value that is a value not directly observed by the sensor 2-n from the second learning model 13a. In addition, the apparatus control device 3 includes the control value calculating unit 14 that calculates the control value of the control target apparatus using the observed value acquired by the observed value acquiring unit 11, the observation predicted value acquired by the observation predicted value acquiring unit 12, and the unobservable value acquired by the unobservable value acquiring unit 13. Therefore, the apparatus control device 3 can acquire a control value that changes depending on the unobservable value that is a value not directly observed by the sensor 2-n.

In the apparatus control device 3 illustrated in FIG. 1, the state prediction unit 15 obtains the solution of the equation of state on the assumption that each of the parameters $P_{1j}$, $P_{2k}$, and $P_{3g}$ included in the equation of state is a default value. However, this is merely an example, and the state prediction unit 15 may determine each of the parameters $P_{1j}$, $P_{2k}$, and $P_{3g}$ as follows.

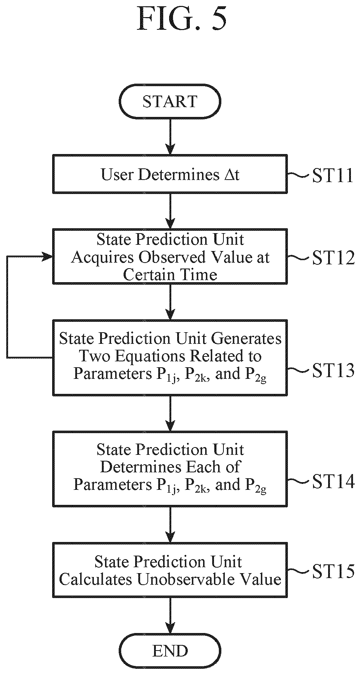

FIG. 5 is a flowchart illustrating processing contents of the state prediction unit 15.

First, a user determines $\Delta t$ that satisfies the following Equation (3) (step ST11 in FIG. 5).

$$Z^m(t + \Delta t) - Z^m(t) = 0$$

$$(3)$$

The state prediction unit 15 acquires observed values $X^j(t_h-\Delta t)$, $X^j(t_h)$, and $X^j(t_h+\Delta t)$ at certain times $t_h-\Delta t$, $t_h$, $t_h+\Delta t$ from the observed value acquiring unit 11 (step ST12 in FIG. 5).

Assuming that dX/dt is the right hand side of the following Equation (4), the state prediction unit 15 generates two equations related to the parameters $P_{1j}$, $P_{2k}$, and $P_{3g}$ included in the equation of state shown in Equation (1) (step ST13 in FIG. 5). The two equations include, for example, an equation obtained by subtracting the equation of state shown in Equation (1) when the time t is the time $t_h$ from the equation of state shown in Equation (1) when the time t is the time $t_h-\Delta t$, and an equation obtained by subtracting the equation of state shown in Equation (1) when the time t is the time $t_h+\Delta t$ from the equation of state shown in Equation (1) when the time t is the time $t_h$.

$$\frac{dX}{dt} = \frac{X(t_h + \Delta t) - X(t_h)}{\Delta t}$$

$$(4)$$

The state prediction unit 15 obtains two equations at different times by repeating the processing of steps ST12 and ST13 a specified number of times.

The state prediction unit 15 determines each of the parameters $P_{1j}$, $P_{2k}$, and $P_{3g}$ on the basis of the two equations at different times (step ST14 in FIG. 5).

The state prediction unit 15 calculates an unobservable value $Z^m(t)$ on the basis of the parameters $P_{1j}$, $P_{2k}$, and $P_{3g}$ (step ST15 in FIG. 5).

Here, the state prediction unit 15 determines each of the parameters $P_{1j}$, $P_{2k}$, and $P_{3g}$, and calculates the unobservable value $Z^m(t)$ on the basis of the parameters $P_{1j}$, $P_{2k}$, and $P_{3g}$. However, this is merely an example, and the state prediction unit 15 may simply determine each of the parameters $P_{1j}$, $P_{2k}$, and $P_{3g}$ and output the unobservable value $Z^m(t)$ from the unobservable value acquiring unit 13.

The unobservable value $Z^m(t)$ based on the parameters $P_{1j}$, $P_{2k}$, and $P_{3g}$ can be obtained by the state prediction unit 15 performing a simulation, for example.

Second Embodiment

In a second embodiment, an apparatus control device 3 in which a control value calculating unit 18 includes a control value receiving unit 19 that receives a control value of a control target apparatus from the outside of the unit will be described.

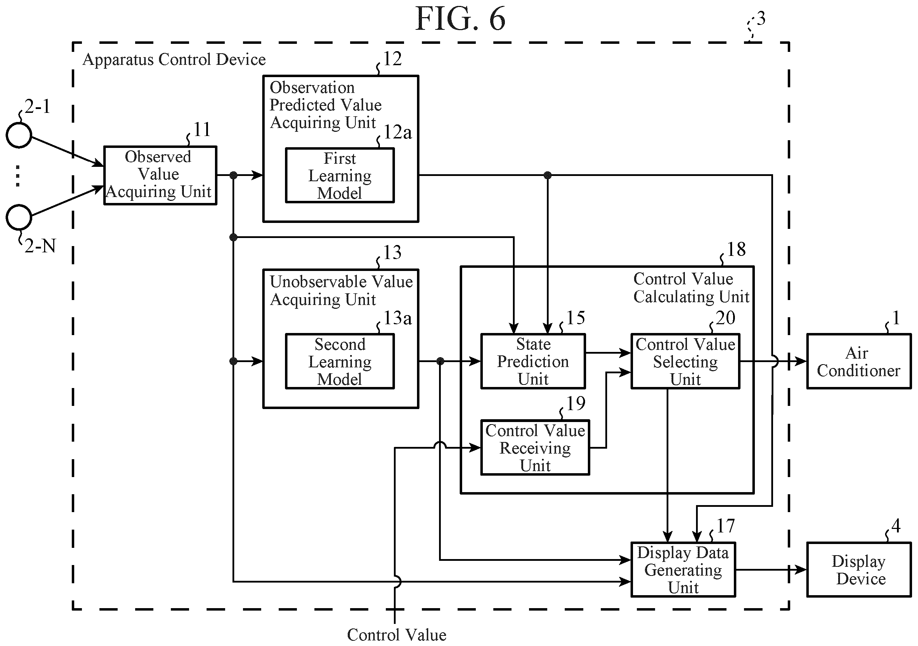

FIG. 6 is a configuration diagram illustrating an apparatus control system including the apparatus control device 3 according to the second embodiment. In FIG. 6, the same reference numerals as those in FIG. 1 denote the same or corresponding parts, and thus description thereof is omitted.

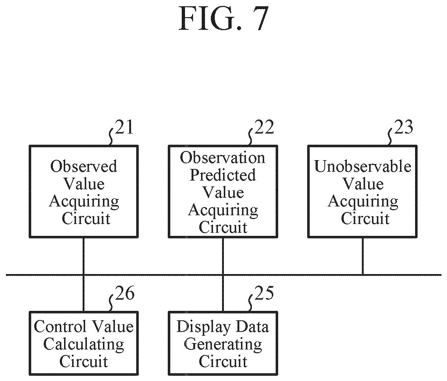

FIG. 7 is a hardware configuration diagram illustrating hardware of the apparatus control device 3 according to the second embodiment. In FIG. 7, the same reference numerals as those in FIG. 2 denote the same or corresponding parts, and thus description thereof is omitted.

The control value calculating unit 18 is implemented by, for example, a control value calculating circuit 26 illustrated in FIG. 7.

The control value calculating unit 18 includes a state prediction unit 15, the control value receiving unit 19, and a control value selecting unit 20.

The control value receiving unit 19 receives control values $W(t)'$ and $W(t+q)'$ of an air conditioner 1 from the outside of the unit, and outputs control values $W(t)'$, $W(t+1)'$, ..., $W(t+Q)'$ to the control value selecting unit 20.

The control value selecting unit 20 acquires control values $W^g(t)$, $W^g(t+1)$, ..., $W^g(t+Q)$ for C control methods from the state prediction unit 15, and acquires control values $W(t)'$, $W(t+1)'$, ..., $W(t+Q)'$ from the control value receiving unit 19.

The control value selecting unit 20 selects any one control value among the control values $W^g(t)$, $W^g(t+1)$, ..., $W^g(t+Q)$ for C control methods and the control values $W(t)'$, $W(t+1)'$, ..., $W(t+Q)'$.

The control value selecting unit 20 outputs the selected control value to each of the air conditioner 1 and a display data generating unit 17.

In FIG. 6, it is assumed that each of an observed value acquiring unit 11, an observation predicted value acquiring unit 12, an unobservable value acquiring unit 13, the control value calculating unit 18, and the display data generating unit 17, which are components of the apparatus control device 3, is implemented by dedicated hardware illustrated in FIG. 7. That is, it is assumed that the apparatus control device 3 is implemented by an observed value acquiring circuit 21, an observation predicted value acquiring circuit 22, an unobservable value acquiring circuit 23, the control value calculating circuit 26, and a display data generating circuit 25.

Each of the observed value acquiring circuit 21, the observation predicted value acquiring circuit 22, the unobservable value acquiring circuit 23, the control value calculating circuit 26, and the display data generating circuit 25 corresponds to, for example, a single circuit, a composite circuit, a programmed processor, a parallel programmed processor, ASIC, FPGA, or a combination thereof.

The components of the apparatus control device 3 are not limited to those implemented by dedicated hardware, and the apparatus control device 3 may be implemented by software, firmware, or a combination of software and firmware.

In a case where the apparatus control device 3 is implemented by software, firmware, or the like, a program for causing a computer to execute each processing procedure in each of the observed value acquiring unit 11, the observation predicted value acquiring unit 12, the unobservable value acquiring unit 13, the control value calculating unit 18, and the display data generating unit 17 is stored in the memory 31 illustrated in FIG. 3. Then, the processor 32 illustrated in FIG. 3 executes the program stored in the memory 31.

In addition, FIG. 7 illustrates an example in which each of the components of the apparatus control device 3 is implemented by dedicated hardware, and FIG. 3 illustrates an example in which the apparatus control device 3 is implemented by software, firmware, or the like. However, this is merely an example, and some components in the apparatus control device 3 may be implemented by dedicated hardware, and the remaining components may be implemented by software, firmware, or the like.

Next, an operation of the apparatus control system illustrated in FIG. 6 will be described.

A user uses, for example, a man-machine interface (not illustrated) to perform an operation of giving control values W(t)', W(t+1)', ..., W(t+Q)' of the air conditioner 1 to the apparatus control device 3. The man-machine interface is, for example, a mouse or a keyboard.

The control value receiving unit 19 of the apparatus control device 3 receives the control values W(t)', W(t+1)', ..., W(t+Q)' of the air conditioner 1 output from the man-machine interface, and outputs the control values W(t)', W(t+1)', ..., W(t+Q)' to the control value selecting unit 20.

In the apparatus control system illustrated in FIG. 6, the control value receiving unit 19 receives the control values W(t)', W(t+1)', ..., W(t+Q)' from the man-machine interface. However, this is merely an example, and the control value receiving unit 19 may receive the control values W(t)', W(t+1)', ..., W(t+Q)' transmitted from a communication device (not illustrated), for example.

The control value selecting unit 20 acquires control values $W^g(t)$, $W^g(t+1)$, ..., $W^g(t+Q)$ for C control methods from the state prediction unit 15, and acquires control values W(t)', W(t+1)', ..., W(t+Q)' from the control value receiving unit 19.

The control value selecting unit 20 selects any one control value among the control values $W^g(t)$, $W^g(t+1)$, ..., $W^g(t+Q)$ for C control methods and the control values W(t)', W(t+1)', ..., W(t+Q)'.

For example, the control value selecting unit 20 compares the predicted error of the observation predicted value $X^i(t)$ used when the control value $W^g(t-1)$ is calculated by each of the C control methods with the predicted error of the observation predicted value $X^i(t)$ when the control value W(t-1)' is used. That is, the control value selecting unit 20 compares (C+1) predicted errors with each other.

The control value selecting unit 20 selects a control value with the smallest predicted error among the control values $W^g(t)$, $W^g(t+1)$, ..., $W^g(t+Q)$ for C control methods and the control values W(t)', W(t+1)', ..., W(t+Q)'.

The control value selecting unit 20 outputs the selected control value to each of the air conditioner 1 and the display data generating unit 17.

In the second embodiment described above, the apparatus control device 3 illustrated in FIG. 6 is configured that the control value calculating unit 18 includes the control value receiving unit 19 that receives the control value of the control target apparatus from the outside of the unit, and the control value selecting unit 20 selects any one control value among a plurality of control values calculated by the state prediction unit 15 and the control values received by the control value receiving unit 19. Therefore, like the apparatus control device 3 illustrated in FIG. 1, the apparatus control device 3 illustrated in FIG. 6 can acquire a control value that changes depending on an unobservable value that is a value not directly observed by the sensor 2-n, and can also acquire a control value provided from the outside of the device as the control value of the control target apparatus.

Third Embodiment

In a third embodiment, an apparatus control device 3 will be described in which a display data generating unit 41 stores an observation predicted value acquired by an observation predicted value acquiring unit 12, and generates display data for displaying information indicating that a difference is larger than a threshold when the difference between the stored observation predicted value and the observed value acquired by an observed value acquiring unit 11 is larger than the threshold.

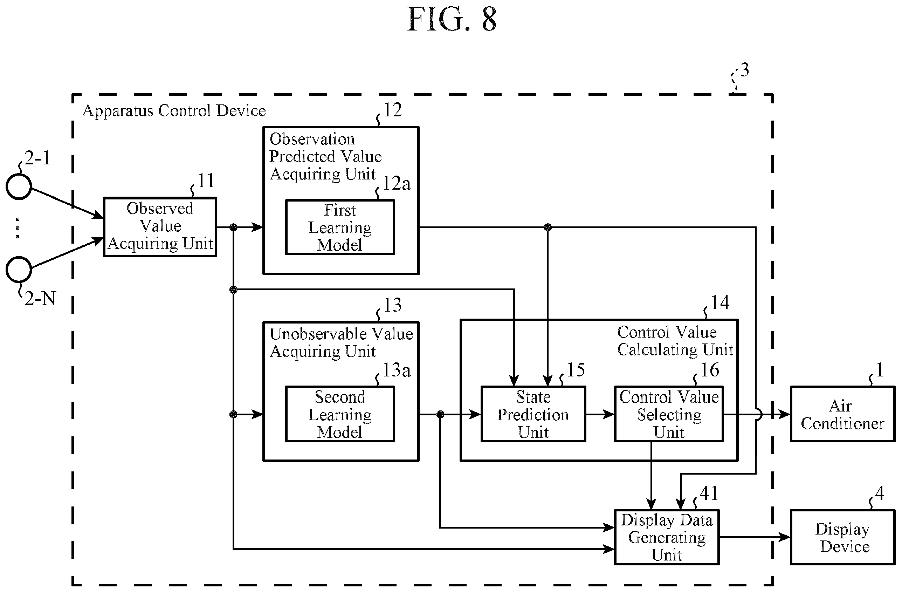

FIG. 8 is a configuration diagram illustrating an apparatus control system including the apparatus control device 3 according to the third embodiment. In FIG. 8, the same reference numerals as those in FIGS. 1 and 6 denote the same or corresponding parts, and thus description thereof is omitted.

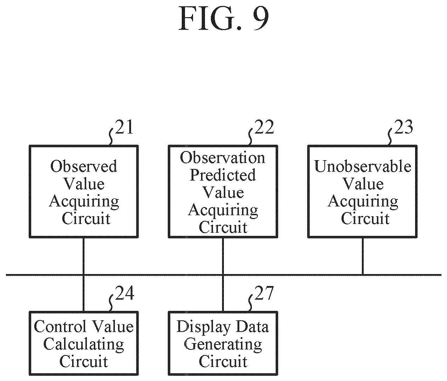

FIG. 9 is a hardware configuration diagram illustrating hardware of the apparatus control device 3 according to the third embodiment. In FIG. 9, the same reference numerals as those in FIGS. 2 and 7 denote the same or corresponding parts, and thus description thereof is omitted.

The display data generating unit 41 is implemented by, for example, a display data generating circuit 27 illustrated in FIG. 9.

Like the display data generating unit 17 illustrated in FIG. 1, the display data generating unit 41 generates display data for displaying an unobservable value acquired by an unobservable value acquiring unit 13 and a control value calculated by a control value calculating unit 14, and outputs the display data to a display device 4.

In addition, like the display data generating unit 17 illustrated in FIG. 1, the display data generating unit 41 generates display data for displaying the observed value acquired by the observed value acquiring unit 11 and the observation predicted value acquired by the observation predicted value acquiring unit 12, and outputs the display data to the display device 4.

Unlike the display data generating unit 17 illustrated in FIG. 1, the display data generating unit 41 stores an observation predicted value $X^j(t)$ acquired at a time (t-1) by the observation predicted value acquiring unit 12.

The display data generating unit 41 calculates a difference $\Delta X^j(t)$ between the stored observation predicted value $X^j(t)$ and the observed value $X^j(t)$ acquired by the observed value acquiring unit 11.

When the difference $\Delta X^j(t)$ is larger than a threshold Th, the display data generating unit 41 generates display data for displaying information indicating that the difference $\Delta X^j(t)$ is larger than the threshold Th, and outputs the display data to the display device 4. The threshold Th may be stored in an internal memory of the display data generating unit 41 or may be provided from the outside of the apparatus control device 3.

In the apparatus control device 3 illustrated in FIG. 8, the display data generating unit 41 is used in the apparatus control device 3 illustrated in FIG. 1. However, this is merely an example, and the display data generating unit 41 may be used in the apparatus control device 3 illustrated in FIG. 6.

In FIG. 8, it is assumed that each of the observed value acquiring unit 11, the observation predicted value acquiring unit 12, the unobservable value acquiring unit 13, the control value calculating unit 14, and the display data generating unit 41, which are components of the apparatus control device 3, is implemented by dedicated hardware illustrated in FIG. 9. That is, it is assumed that the apparatus control device 3 is implemented by an observed value acquiring circuit 21, an observation predicted value acquiring circuit 22, an unobservable value acquiring circuit 23, a control value calculating circuit 24, and the display data generating circuit 27.

Each of the observed value acquiring circuit 21, the observation predicted value acquiring circuit 22, the unobservable value acquiring circuit 23, the control value calculating circuit 24, and the display data generating circuit 27 corresponds to, for example, a single circuit, a composite circuit, a programmed processor, a parallel programmed processor, ASIC, FPGA, or a combination thereof.

The components of the apparatus control device 3 are not limited to those implemented by dedicated hardware, and the apparatus control device 3 may be implemented by software, firmware, or a combination of software and firmware.

In a case where the apparatus control device 3 is implemented by software, firmware, or the like, a program for causing a computer to execute each processing procedure in each of the observed value acquiring unit 11, the observation predicted value acquiring unit 12, the unobservable value acquiring unit 13, the control value calculating unit 14, and the display data generating unit 41 is stored in the memory 31 illustrated in FIG. 3. Then, the processor 32 illustrated in FIG. 3 executes the program stored in the memory 31.

In addition, FIG. 9 illustrates an example in which each of the components of the apparatus control device 3 is implemented by dedicated hardware, and FIG. 3 illustrates an example in which the apparatus control device 3 is implemented by software, firmware, or the like. However, this is merely an example, and some components in the apparatus control device 3 may be implemented by dedicated hardware, and the remaining components may be implemented by software, firmware, or the like.

Next, an operation of the apparatus control system illustrated in FIG. 8 will be described. Here, the apparatus control system is similar to the apparatus control system illustrated in FIG. 1 except for the display data generating unit 41, and thus, an operation of the display data generating unit 41 will be mainly described here.

The display data generating unit 41 acquires the observation predicted value $X^j(t)$ acquired at the time (t-1) by the observation predicted value acquiring unit 12, and stores the observation predicted value $X^j(t)$.

The display data generating unit 41 acquires the observed value $X^j(t)$ from the observed value acquiring unit 11.

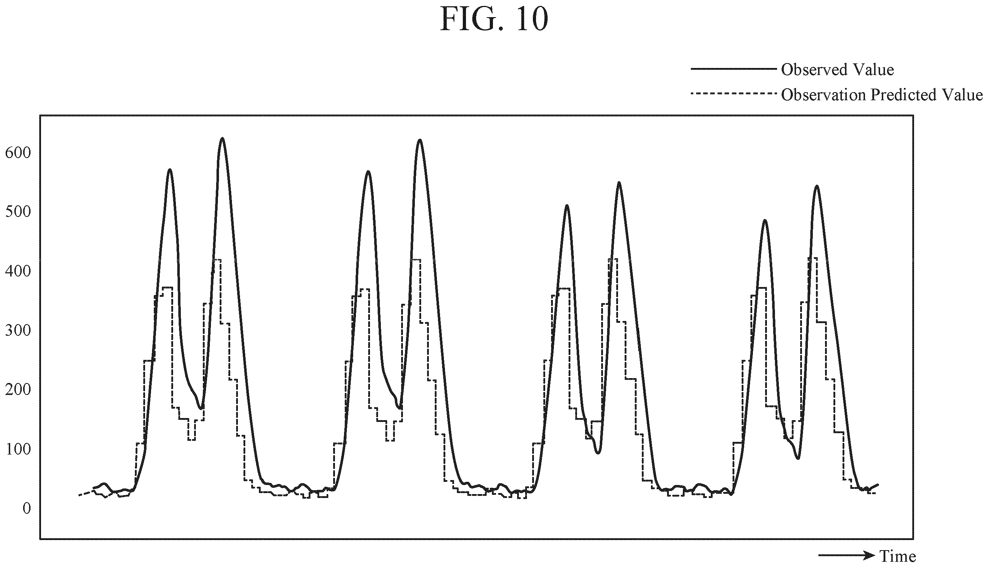

FIG. 10 is an explanatory diagram illustrating the observation predicted value $X^j(t)$ and the observed value $X^j(t)$ acquired at the time (t-1).

In FIG. 10, the horizontal axis represents time, and the vertical axis represents the magnitude of each of the observation predicted value $X^j(t)$ and the observed value $X^j(t)$.

A solid line indicates the observed value $X^j(t)$, and a broken line indicates the observation predicted value $X^j(t)$.

The display data generating unit 41 calculates a difference $\Delta X^j(t)$ between the stored observation predicted value $X^j(t)$ and the observed value $X^j(t)$ as represented by the following equation (5).

$$\Delta X^j(t) = |\text{observation predicted value } X^j(t) - \text{observed value } X^j(t)| \qquad (5)$$

The display data generating unit 41 compares the difference $\Delta X^j(t)$ with the threshold Th.

When the difference $\Delta X^j(t)$ is larger than the threshold Th, the display data generating unit 41 generates display data for displaying information indicating that the difference $\Delta X^j(t)$ is larger than the threshold Th, and outputs the display data to the display device 4.

The display device 4 causes a display to display information indicating that the difference $\Delta X^j(t)$ is larger than the threshold Th based on the display data. A user viewing the information displayed on the display can recognize that the predicted error is large.

In the apparatus control system illustrated in FIG. 8, the display data generating unit 41 generates the display data for displaying the information indicating that the difference $\Delta X^j(t)$ is larger than the threshold Th. However, this is merely an example, and when the difference $\Delta X^j(t)$ is larger than the threshold Th, the display data generating unit 41 may generate display data for highlighting at least one of the observed value $X^i(t)$ or the observation predicted value $X^i(t)$.

In addition, when the difference $\Delta X^j(t)$ is larger than the threshold Th, the display data generating unit 41 may generate display data for highlighting the control value $W^g(t)$.

INDUSTRIAL APPLICABILITY

The present disclosure is suitable for an apparatus control device and an apparatus control method.

REFERENCE SIGNS LIST

1: air conditioner, 2-1 to 2-N: sensor, 3: apparatus control device, 4: display device, 11: observed value acquiring unit, 12: observation predicted value acquiring unit, 12a: first learning model, 13: unobservable value acquiring unit, 13a: second learning model, 14, 18: control value calculating unit, 15: state prediction unit, 16, 20: control value selecting unit, 17, 41: display data generating unit, 19: control value receiving unit, 21: observed value acquiring circuit, 22: observation predicted value acquiring circuit, 23: unobservable value acquiring circuit, 24, 26: control value calculating circuit, 25, 27: display data generating circuit, 31: memory, 32: processor

**Claims**

1. An apparatus control device comprising:

   an observed value acquiring unit (11) configured to acquire, from a sensor (2-1) -(2-N) configured to observe an environment in which a control target apparatus is installed, an observed value of the environment;
   an observation predicted value acquiring unit (12) configured to give an observed value acquired by the observed value acquiring unit to a first learning model (12a) and to acquire an observation predicted value that is a future observed value from the sensor from the first learning model;
   an unobservable value acquiring unit (13) configured to give an observed value acquired by the observed value acquiring unit to a second learning model (13a) and to acquire an unobservable value that is a value not directly observed by the sensor from the second learning model; and
   a control value calculating unit (14;18) configured to calculate a control value of the control target apparatus using an observed value acquired by the observed value acquiring unit, an observation predicted value acquired by the observation predicted value acquiring unit, and an unobservable value acquired by the unobservable value acquiring unit,
   wherein
   the control value calculating unit includes a state prediction unit (15) configured to, by substituting an observed value acquired by the observed value acquiring unit, an observation predicted value acquired by the observation predicted value acquiring unit, and an unobservable value acquired by the unobservable value acquiring unit into each of equations of state in each of a plurality of control methods, calculate a control value for each of the plurality of control methods as a control value of the control target apparatus, and
   a control value selecting unit (16;20) configured to select a control value for any one of the plurality of control methods among control values for the plurality of control methods calculated by the state prediction unit, wherein the control value selecting unit is configured to select a control value with a minimum predicted error of an observation predicted value acquired by the observation predicted value acquiring unit among control values for the plurality of control methods calculated by the state prediction unit.

2. The apparatus control device according to claim 1, wherein

   the observed value acquiring unit is configured to give an observed value acquired by the observed value acquiring unit to the second learning model and to acquire a current unobservable value and a future unobservable value from the second learning model, and
   the control value calculating unit is configured to calculate, as a control value of the control target apparatus, control values at a plurality of times from present to future using an observed value acquired by the observed value acquiring unit, an observation predicted value acquired by the observation predicted value acquiring unit, the current unobservable value, and the future unobservable value.

3. The apparatus control device according to claim 1, wherein

the control value calculating unit includes a control value receiving unit (19) configured to receive a control value of the control target apparatus from outside of the control value receiving unit, and
the control value selecting unit (20) is configured to select any one control value among control values for a plurality of control methods calculated by the state prediction unit and a control value received by the control value receiving unit.

4. The apparatus control device according to claim 1, further comprising a display data generating unit (17;41) configured to generate display data for displaying one or more of an unobservable value acquired by the unobservable value acquiring unit and a control value calculated by the control value calculating unit.

5. The apparatus control device according to claim 4, wherein the display data generating unit is configured to generate display data for displaying one or more of an observed value acquired by the observed value acquiring unit and an observation predicted value acquired by the observation predicted value acquiring unit.

6. The apparatus control device according to claim 5, wherein the display data generating unit (41) is configured to store an observation predicted value acquired by the observation predicted value acquiring unit, and when a difference between an observation predicted value stored and an observed value acquired by the observed value acquiring unit is larger than a threshold, to generate display data for displaying information indicating that the difference is larger than the threshold.

7. An apparatus control method comprising:

by an observed value acquiring unit, acquiring, from a sensor to observe an environment in which a control target apparatus is installed, an observed value of the environment;
by an observation predicted value acquiring unit, giving an observed value acquired by the observed value acquiring unit to a first learning model and acquiring an observation predicted value that is a future observed value from the sensor from the first learning model;
by an unobservable value acquiring unit, giving an observed value acquired by the observed value acquiring unit to a second learning model and acquiring an unobservable value that is a value not directly observed by the sensor from the second learning model; and
by a control value calculating unit, calculating a control value of the control target apparatus using an observed value acquired by the observed value acquiring unit, an observation predicted value acquired by the observation predicted value acquiring unit, and an unobservable value acquired by the unobservable value acquiring unit, further comprising:

by a state prediction unit of the control value calculating unit, by substituting an observed value acquired by the observed value acquiring unit, an observation predicted value acquired by the observation predicted value acquiring unit, and an unobservable value acquired by the unobservable value acquiring unit into each of equations of state in each of a plurality of control methods, calculating a control value for each of the plurality of control methods as a control value of the control target apparatus, and
by a control value selecting unit of the control value calculating unit, selecting a control value for any one of the plurality of control methods among control values for the plurality of the control methods calculated by the state prediction unit, wherein
the control value selecting unit selects a control value with a minimum predicted error of an observation predicted value acquired by the observation predicted value acquiring unit among control values for the plurality of control methods calculated by the state prediction unit.

**Patentansprüche**

1. Vorrichtungssteuereinrichtung, umfassend:

eine Beobachteter-Wert-Erwerbungseinheit (11), die konfiguriert ist, von einem Sensor (2-1) - (2-N), der konfiguriert ist, eine Umgebung zu beobachten, in der eine Steuerzielvorrichtung installiert ist, einen beobachteten Wert der Umgebung zu erwerben;

eine Beobachtungsvorhersagewert-Erwerbungseinheit (12), die konfiguriert ist, einen von der Beobachteter-Wert-Erwerbungseinheit erworbenen beobachteten Wert an ein erstes Lernmodell (12a) weiterzugeben, und einen Beobachtungsvorhersagewert, der ein zukünftiger beobachteter Wert von dem Sensor ist, aus dem ersten Lernmodell zu erwerben;

eine Nicht-Beobachtbarer-Wert-Erwerbungseinheit (13), die konfiguriert ist, einen beobachteten Wert, der von der Beobachteter-Wert-Erwerbungseinheit erworben wird, an ein zweites Lernmodell (13a) weiterzugeben, und einen nicht beobachtbaren Wert, der ein nicht direkt von dem Sensor beobachteter Wert ist, aus dem zweiten Lernmodell zu erwerben; und

eine Steuerwert-Berechnungseinheit (14; 18), die konfiguriert ist, einen Steuerwert der Steuerzielvorrichtung unter Verwendung eines beobachteten Werts, der von der Beobachtbarer-Wert-Erwerbungseinheit erworben wird, eines Beobachtungsvorhersagewerts, der von der Beobachtungsvorhersagewert-Erwerbungseinheit erworben wird, und eines nicht beobachtbaren Werts, der von der Nicht-Beobachtbarer-Wert-Erwerbungseinheit erworben wird, zu berechnen,

wobei

die Steuerwert-Berechnungseinheit eine Zustandsvorhersageeinheit (15) aufweist, die konfiguriert ist, durch Ersetzen eines beobachteten Werts, der von der Beobachteter-Wert-Erwerbungseinheit erworben wird, eines Beobachtungsvorhersagewerts, der von der Beobachtungsvorhersagewert-Erwerbungseinheit erworben wird, und eines nicht beobachtbaren Werts, der von der Nicht-Beobachtbarer-Wert-Erwerbungseinheit erworben wird, in jeder von Zustandsgleichungen in jedem einer Vielzahl von Steuerverfahren, einen Steuerwert für jedes der Vielzahl von Steuerverfahren als einen Steuerwert der Steuerzielvorrichtung zu berechnen, und eine Steuerwert-Auswahleinheit (16; 20), die konfiguriert ist, einen Steuerwert für ein beliebiges der Vielzahl von Steuerverfahren unter Steuerwerten für die Vielzahl von Steuerverfahren, die von der Zustandsvorhersageeinheit berechnet werden, auszuwählen, wobei

die Steuerwert-Auswahleinheit konfiguriert ist, einen Steuerwert mit einem minimalen Vorhersagefehler eines durch die Beobachtungsvorhersagewert-Erwerbungseinheit erworbenen Beobachtungsvorhersagewerts unter Steuerwerten für die Vielzahl von durch die Zustandsvorhersageeinheit berechneten Steuerverfahren auszuwählen.

2. Vorrichtungssteuereinrichtung nach Anspruch 1, wobei

die Beobachteter-Wert-Erwerbungseinheit konfiguriert ist, einen von der Beobachteter-Wert-Erwerbungseinheit erworbenen beobachteten Wert an das zweite Lernmodell weiterzugeben, und einen aktuellen nicht beobachtbaren Wert und einen zukünftigen nicht beobachtbaren Wert aus dem zweiten Lernmodell zu erwerben, und die Steuerwert-Berechnungseinheit konfiguriert ist, als einen Steuerwert der Steuerzielvorrichtung Steuerwerte zu einer Vielzahl von Zeitpunkten von der Gegenwart bis in die Zukunft unter Verwendung eines beobachteten Werts, der von der Beobachter-Wert-Erwerbungseinheit erworben wird, eines Beobachtungsvorhersagewerts, der von der Beobachtungsvorhersagewert-Erwerbungseinheit erworben wird, des aktuellen nicht beobachtbaren Werts und des zukünftigen nicht beobachtbaren Werts zu berechnen.

3. Vorrichtungssteuereinrichtung nach Anspruch 1, wobei

die Steuerwert-Berechnungseinheit eine Steuerwert-Empfangseinheit (19) aufweist, die konfiguriert ist, einen Steuerwert der Steuerzielvorrichtung von außerhalb der Steuerwert-Empfangseinheit zu empfangen, und die Steuerwert-Auswahleinheit (20) konfiguriert ist, einen beliebigen Steuerwert unter Steuerwerten für eine Vielzahl von Steuerverfahren, die von der Zustandsvorhersageeinheit berechnet werden, und einen Steuerwert, der von der Steuerwert-Empfangseinheit empfangen wird, auszuwählen.

4. Vorrichtungssteuereinrichtung nach Anspruch 1, ferner umfassend eine Anzeigedaten-Erzeugungseinheit (17; 41), die konfiguriert ist, Anzeigedaten zum Anzeigen eines oder mehrerer von einem nicht beobachtbaren Wert, der von der Nicht-Beobachtbarer-Wert-Erwerbungseinheit erworben wird, und einem Steuerwert, der von der Steuerwert-Berechnungseinheit berechnet wird, zu erzeugen.

5. Vorrichtungssteuereinrichtung nach Anspruch 4, wobei die Anzeigedaten-Erzeugungseinheit konfiguriert ist, Anzeigedaten zum Anzeigen eines oder mehrerer von einem beobachteten Wert, der von der Beobachteter-Wert-Erwerbungseinheit erworben wird, und einem Beobachtungsvorhersagewert, der von der Beobachtungsvorhersagewert-Erwerbungseinheit erworben wird, zu erzeugen.

6. Vorrichtungssteuereinrichtung nach Anspruch 5, wobei die Anzeigedaten-Erzeugungseinheit (41) konfiguriert ist, einen durch die Beobachtungsvorhersagewert-Erwerbungseinheit erworbenen Beobachtungsvorhersagewert zu speichern und, wenn eine Differenz zwischen einem gespeicherten Beobachtungsvorhersagewert und einem durch die Beobachteter-Wert-Erwerbungseinheit erworbenen beobachteten Wert größer als ein Schwellenwert ist, Anzeigedaten zum Anzeigen von Informationen zu erzeugen, die anzeigen, dass die Differenz größer als der Schwellenwert ist.

7. Vorrichtungssteuerverfahren, umfassend:

durch eine Beobachteter-Wert-Erwerbungseinheit, Erwerben, von einem Sensor, der eine Umgebung beobachtet, in der eine Steuerzielvorrichtung installiert ist, eines beobachteten Werts der Umgebung;
durch eine Beobachtungsvorhersagewert-Erwerbungseinheit, Weitergeben eines beobachteten Werts, der von der Beobachteter-Wert-Erwerbungseinheit erworben wird, an ein erstes Lernmodell, und Erwerben eines Beobachtungsvorhersagewerts, der ein zukünftiger beobachteter Wert von dem Sensor ist, aus dem ersten Lernmodell;
durch eine Nicht-Beobachtbarer-Wert-Erwerbungseinheit, Weitergeben eines beobachteten Werts, der von der Beobachteter-Wert-Erwerbungseinheit erworben wird, an ein zweites Lernmodell, und Erwerben eines nicht beobachtbaren Werts, der ein nicht direkt von dem Sensor beobachteter Wert ist, aus dem zweiten Lernmodell; und
durch eine Steuerwert-Berechnungseinheit, Berechnen eines Steuerwerts der Steuerzielvorrichtung unter Verwendung eines beobachteten Werts, der von der Beobachtbarer-Wert-Erwerbungseinheit erworben wird, eines Beobachtungsvorhersagewerts, der von der Beobachtungsvorhersagewert-Erwerbungseinheit erworben wird, und eines nicht beobachtbaren Werts, der von der Nicht-Beobachtbarer-Wert-Erwerbungseinheit erworben wird, ferner umfassend:
durch eine Zustandsvorhersageeinheit der Steuerwert-Berechnungseinheit, durch Ersetzen eines beobachteten Werts, der von der Beobachteter-Wert-Erwerbungseinheit erworben wird, eines Beobachtungsvorhersagewerts, der von der Beobachtungsvorhersagewert-Erwerbungseinheit erworben wird, und eines nicht beobachtbaren Werts, der von der Nicht-Beobachtbarer-Wert-Erwerbungseinheit erworben wird, in jeder von Zustandsgleichungen in jedem einer Vielzahl von Steuerverfahren, Berechnen eines Steuerwerts für jedes der Vielzahl von Steuerverfahren als einen Steuerwert der Steuerzielvorrichtung, und
durch eine Steuerwert-Auswahleinheit der Steuerwert-Berechnungseinheit, Auswählen eines Steuerwerts für ein beliebiges der Vielzahl von Steuerverfahren unter Steuerwerten für die Vielzahl von Steuerverfahren, die von der Zustandsvorhersageeinheit berechnet werden, wobei
die Steuerwert-Auswahleinheit einen Steuerwert mit einem minimalen Vorhersagefehler eines durch die Beobachtungsvorhersagewert-Erwerbungseinheit erworbenen Beobachtungsvorhersagewerts unter Steuerwerten für die Vielzahl von durch die Zustandsvorhersageeinheit berechneten Steuerverfahren auswählt.

**Revendications**

1. Dispositif de commande d'appareil comprenant :

une unité d'acquisition de valeur observée (11) configurée pour acquérir, à partir d'un capteur (2-1) - (2-N) configuré pour observer un environnement dans lequel un appareil de commande cible est installé, une valeur observée de l'environnement ;
une unité d'acquisition de valeur prédite d'observation (12) configurée pour donner une valeur observée acquise par l'unité d'acquisition de valeur observée à un premier modèle d'apprentissage (12a) et pour acquérir une valeur prédite d'observation qui est une future valeur observée du capteur à partir du premier modèle d'apprentissage ;
une unité d'acquisition de valeur non observable (13) configurée pour donner une valeur observée acquise par l'unité d'acquisition de valeur observée à un second modèle d'apprentissage (13a) et pour acquérir une valeur non observable qui est une valeur non directement observée par le capteur à partir du second modèle d'apprentissage ; et
une unité de calcul de valeur de commande (14 ;18) configurée pour calculer une valeur de commande de l'appareil de commande cible à l'aide d'une valeur observée acquise par l'unité d'acquisition de valeur observée, d'une valeur prédite d'observation acquise par l'unité d'acquisition de valeur prédite d'observation, et d'une valeur non observable acquise par l'unité d'acquisition de valeur non observable,
dans lequel

l'unité de calcul de valeur de commande comprend une unité de prédiction d'état (15) configurée pour, en substituant une valeur observée acquise par l'unité d'acquisition de valeur observée, une valeur prédite d'observation acquise par l'unité d'acquisition de valeur prédite d'observation, et une valeur non observable acquise par l'unité d'acquisition de valeur non observable dans chacune des équations d'état de chacun d'une pluralité de procédés de commande, calculer une valeur de commande pour chacun de la pluralité de procédés de commande comme une valeur de commande de l'appareil de commande cible, et

une unité de sélection de valeur de commande (16 ; 20) configurée pour sélectionner une valeur de commande pour l'un quelconque de la pluralité de procédés de commande parmi des valeurs de commande pour la pluralité de procédés de commande calculées par l'unité de prédiction d'état, dans lequel

l'unité de sélection de valeur de commande est configurée pour sélectionner une valeur de commande avec une erreur prédite minimale d'une valeur prédite d'observation acquise par l'unité d'acquisition de valeur prédite d'observation parmi des valeurs de commande pour la pluralité de procédés de commande calculées par l'unité de prédiction d'état.

2. Dispositif de commande d'appareil selon la revendication 1, dans lequel

l'unité d'acquisition de valeur observée est configurée pour donner une valeur observée acquise par l'unité d'acquisition de valeur observée au second modèle d'apprentissage et pour acquérir une valeur non observable actuelle et une valeur non observable future à partir du second modèle d'apprentissage, et

l'unité de calcul de valeur de commande est configurée pour calculer, comme une valeur de commande de l'appareil de commande cible, des valeurs de commande à une pluralité de moments, du présent au futur, en utilisant une valeur observée acquise par l'unité d'acquisition de valeur observée, une valeur prédite d'observation acquise par l'unité d'acquisition de valeur prédite d'observation, la valeur non observable actuelle et la valeur non observable future.

3. Dispositif de commande d'appareil selon la revendication 1, dans lequel

l'unité de calcul de valeur de commande comprend une unité de réception de valeur de commande (19) configurée pour recevoir une valeur de commande de l'appareil de commande cible depuis l'extérieur de l'unité de réception de valeur de commande, et

l'unité de sélection de valeur de commande (20) est configurée pour sélectionner une quelconque valeur de commande parmi des valeurs de commande pour une pluralité de procédés de commande calculées par l'unité de prédiction d'état et une valeur de commande reçue par l'unité de réception de valeur de commande.

4. Dispositif de commande d'appareil selon la revendication 1, comprenant en outre une unité de génération de données d'affichage (17 ; 41) configurée pour générer des données d'affichage pour afficher une ou plusieurs valeurs d'une valeur non observable acquise par l'unité d'acquisition de valeur non observable et d'une valeur de commande calculée par l'unité de calcul de valeur de commande.

5. Dispositif de commande d'appareil selon la revendication 4, dans lequel l'unité de génération de données d'affichage est configurée pour générer des données d'affichage pour afficher une ou plusieurs valeurs d'une valeur observée acquise par l'unité d'acquisition de valeur observée et d'une valeur prédite d'observation acquise par l'unité d'acquisition de valeur prédite d'observation.

6. Dispositif de commande d'appareil selon la revendication 5, dans lequel l'unité de génération de données d'affichage (41) est configurée pour stocker une valeur prédite d'observation acquise par l'unité d'acquisition de valeur prédite d'observation, et lorsqu'une différence entre une valeur prédite d'observation stockée et une valeur observée acquise par l'unité d'acquisition de valeur observée est supérieure à un seuil, pour générer des données d'affichage afin d'afficher des informations indiquant que la différence est supérieure au seuil.

7. Procédé de commande d'appareil comprenant :

par une unité d'acquisition de valeur observée, l'acquisition, à partir d'un capteur permettant d'observer un environnement dans lequel un appareil de commande cible de contrôle est installé, d'une valeur observée de l'environnement ;

par une unité d'acquisition de valeur prédite d'observation, la fourniture d'une valeur observée acquise par l'unité d'acquisition de valeur observée à un premier modèle d'apprentissage et l'acquisition d'une valeur prédite d'observation qui est une future valeur observée du capteur à partir du premier modèle d'apprentissage ;

par une unité d'acquisition de valeur non observable, la fourniture d'une valeur observée acquise par l'unité d'acquisition de valeur observée à un second modèle d'apprentissage et l'acquisition d'une valeur non observable qui est une valeur non directement observée par le capteur à partir du second modèle d'apprentissage ; et par une unité de calcul de valeur de commande, le calcul d'une valeur de commande de l'appareil de commande cible à l'aide d'une valeur observée acquise par l'unité d'acquisition de valeur observée, d'une valeur prédite d'observation acquise par l'unité d'acquisition de valeur prédite d'observation, et d'une valeur non observable acquise par l'unité d'acquisition de valeur non observable, comprenant en outre :

par une unité de prédiction d'état de l'unité de calcul de valeur de commande, en substituant une valeur observée acquise par l'unité d'acquisition de valeur observée, une valeur prédite d'observation acquise par l'unité d'acquisition de valeur prédite d'observation, et une valeur non observable acquise par l'unité d'acquisition de valeur non observable dans chacune des équations d'état de chacun d'une pluralité de procédés de commande, le calcul d'une valeur de commande pour chacun de la pluralité de procédés de commande comme une valeur de commande de l'appareil de commande cible, et

par une unité de sélection de valeur de commande de l'unité de calcul de valeur de commande, la sélection d'une valeur de commande pour l'un quelconque de la pluralité de procédés de commande parmi des valeurs de commande pour la pluralité de procédés de commande calculées par l'unité de prédiction d'état, dans lequel

l'unité de sélection de valeur de commande sélectionne une valeur de commande avec une erreur prédite minimale d'une valeur prédite d'observation acquise par l'unité d'acquisition de valeur prédite d'observation parmi des valeurs de commande pour la pluralité de procédés de commande calculées par l'unité de prédiction d'état.

FIG. 1

Air Conditioner  1

Display Device  4

Apparatus Control Device  3

Observed Value Acquiring Unit  11

Observation Predicted Value Acquiring Unit  12
First Learning Model  12a

Unobservable Value Acquiring Unit  13
Second Learning Model  13a

Control Value Calculating Unit  14

State Prediction Unit  15

Control Value Selecting Unit  16

Display Data Generating Unit  17

2-1 ... 2-N

# FIG. 2

```
    ⌒21              ⌒22              ⌒23
┌──────────┐   ┌──────────┐   ┌────────────┐
│ Observed │   │Observation│   │Unobservable│
│  Value   │   │ Predicted │   │   Value    │
│Acquiring │   │  Value    │   │ Acquiring  │
│ Circuit  │   │Acquiring  │   │  Circuit   │
│          │   │ Circuit   │   │            │
└──────────┘   └──────────┘   └────────────┘
```

```
    ⌒24              ⌒25
┌──────────────┐ ┌──────────────┐
│Control Value │ │ Display Data │
│ Calculating  │ │  Generating  │
│   Circuit    │ │   Circuit    │
└──────────────┘ └──────────────┘
```

# FIG. 3

```
       ⌒31              ⌒32
┌──────────────┐ ┌──────────────┐
│    Memory    │ │  Processor   │
└──────────────┘ └──────────────┘
```

# FIG. 4

START

Observed Value Acquiring Unit
Acquires Observed Value of
Environment ~ST1

Observation Predicted Value
Acquiring Unit Acquires
Observation Predicted Value ~ST2

Unobservable Value Acquiring Unit
Acquires Unobservable Value ~ST3

State Prediction Unit
Obtains Solution of
Each Equation of State as
Control Value of Air Conditioner ~ST4

Control Value Selecting Unit
Selects Control Value for
Any One of Control Methods ~ST5

Display Data Generating Unit
Generates Display Data ~ST6

END

# FIG. 5

```
            ┌─────────────┐
            │    START    │
            └─────────────┘
                   │
                   ▼
    ┌───────────────────────────┐
    │    User Determines Δt      │──~ST11
    └───────────────────────────┘
                   │
                   ▼
    ┌───────────────────────────┐
    │   State Prediction Unit    │
 ──▶│  Acquires Observed Value at│──~ST12
 │  │       Certain Time         │
 │  └───────────────────────────┘
 │                 │
 │                 ▼
 │  ┌───────────────────────────┐
 │  │State Prediction Unit Generates│
 └──│  Two Equations Related to  │──~ST13
    │ Parameters P₁ⱼ, P₂ₖ, and P₂ᵧ│
    └───────────────────────────┘
                   │
                   ▼
    ┌───────────────────────────┐
    │    State Prediction Unit   │
    │       Determines Each of   │──~ST14
    │ Parameters P₁ⱼ, P₂ₖ, and P₂ᵧ│
    └───────────────────────────┘
                   │
                   ▼
    ┌───────────────────────────┐
    │    State Prediction Unit   │
    │Calculates Unobservable Value│──~ST15
    └───────────────────────────┘
                   │
                   ▼
            ┌─────────────┐
            │     END     │
            └─────────────┘
```

# FIG. 6

# FIG. 7

```
        ┌21              ┌22                ┌23
┌──────────────┐  ┌──────────────┐  ┌──────────────┐
│   Observed   │  │  Observation │  │ Unobservable │
│    Value     │  │   Predicted  │  │    Value     │
│  Acquiring   │  │    Value     │  │  Acquiring   │
│   Circuit    │  │  Acquiring   │  │   Circuit    │
│              │  │   Circuit    │  │              │
└──────────────┘  └──────────────┘  └──────────────┘

        ┌26              ┌25
┌──────────────┐  ┌──────────────┐
│Control Value │  │ Display Data │
│ Calculating  │  │  Generating  │
│   Circuit    │  │   Circuit    │
└──────────────┘  └──────────────┘
```

# FIG. 8

FIG. 9

```
        ⌒21                    ⌒22                    ⌒23
┌──────────────┐    ┌──────────────┐    ┌──────────────┐
│   Observed   │    │  Observation │    │ Unobservable │
│    Value     │    │   Predicted  │    │    Value     │
│  Acquiring   │    │    Value     │    │  Acquiring   │
│   Circuit    │    │  Acquiring   │    │   Circuit    │
│              │    │   Circuit    │    │              │
└──────────────┘    └──────────────┘    └──────────────┘
        │                    │                    │
────────┼────────────────────┼────────────────────┼──────────
        │    ⌒24             │    ⌒27
┌──────────────┐    ┌──────────────┐
│Control Value │    │ Display Data │
│ Calculating  │    │  Generating  │
│   Circuit    │    │   Circuit    │
└──────────────┘    └──────────────┘
```

FIG. 10

**EP 4 428 463 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021156565 A
- US 2018088544 A1
- WO 2020183631 A1
- US 2018313557 A1
- JP H06207735 A
- JP 2020134051 A